# EUROPÄISCHE PATENTSCHRIFT

(11) **EP 3 324 042 B1**
(45) Veröffentlichungstag und Bekanntmachung des Hinweises auf die Patenterteilung: **18.09.2019**
(21) Anmeldenummer: 17196046.1
(22) Anmeldetag: 12.10.2017
(51) Int. Cl.: F03D 1/06

(54) **ROTORBLATTVERSTELLUNG**
ROTOR BLADE ADJUSTMENT
PALE DE ROTOR

(30) Priorität: 18.11.2016 DE 102016222731
(43) Veröffentlichungstag der Anmeldung: 23.05.2018
(73) Patentinhaber: ContiTech Antriebssysteme GmbH, 30165 Hannover (DE)
(72) Erfinder: Göser, Hubert, 29451 Dannenberg (DE); Kucharczyk, Andre, 29499 Gülden (DE)
(74) Vertreter: Kilsch, Armin Ralph

(56) Entgegenhaltungen:
- WO-A1-2017/207491
- CN-U- 204 003 267
- DE-A1-102013 206 878

## Beschreibung

Die Erfindung betrifft eine Einrichtung zur Rotorblattverstellung an einer Windkraftanlage, bei der die Verstellung eines drehbar gelagerten Rotorblattes über einen Zugriementrieb erfolgt, bei dem ein Zugriemen den Fuß bzw. Schaft des Rotorblattes mindestens teilweise so umschlingt, dass ein zur Verstellung des Rotorblattes erforderliches Drehmoment auf den Schaft übertragbar ist.

Die Erzeugung von elektrischer Energie durch Windkraftanlagen ist dann besonders effektiv, wenn die Windkraftanlage bzw. der Generator im Bereich ihrer Nennleistung arbeiten kann. Bei unterschiedlichen Windgeschwindigkeiten ist dies dann effizient und materialschonend für die gesamte Anlage, wenn die Drehzahl des Rotors trotz schwankender Windstärken annähernd konstant gehalten wird. Die exakte Leistungsregelung ist daher für den gleichmäßigen Lauf des Generators besonders wichtig. Eine Regelung der Leistungsaufnahme geschieht heute in aller Regel durch Verdrehen der Rotorblätter. Die Rotorblätter werden durch einen Blattverstellantrieb, die so genannte Rotorblattverstellung, in unterschiedliche Positionen in Relation zur Anströmung durch den Wind gebracht.

Bei schwachem Wind werden die Rotorblätter etwa so eingestellt, dass das Rotorblattprofil mit einem großen Anstellwinkel, d.h. mit nahezu voller Breite gegen die Strömung steht. Bei auffrischendem Wind wird dann der Anstellwinkel zunehmend reduziert, bis bei Sturm die Blätter parallel zur Windströmung gerichtet werden (Fahnenstellung) und der Rotor im Extremfall stoppt und sich nicht mehr dreht. Die Rotorblattverstellung ist daher eines der wichtigsten Regelsysteme einer modernen Windenergieanlage. Die Regelung der Verstellung wird auch als "Pitch-Regelung" bezeichnet. Für den Verstellmechanismus als solchen existieren unterschiedliche elektrische und hydraulische Systeme, nämlich elektromechanische Verstelleinrichtungen mit Zahnradantrieben/Stirnradgetrieben, hydraulische Verstelleinrichtungen mit Zylinder, oft für jedes einzelne Rotorblatt, ebenso wie die bei der hier vorliegenden Erfindung betroffene Verstelleinrichtung der Rotorblätter über einen Zugmittelantrieb.

Abhängig von den einzelnen Systemen ist eine Blattverstellung um bis zu 180 Grad um die senkrecht zur Drehachse gelegene Rotorlängsachse möglich, wodurch die Rotorblätter in einem Bereich verschwenkt werden können, der von ihrer Maximalleistung bis zur "Fahnenstellung" oder Bremsung reicht.

Die heute zur Verstellung noch dominierenden Stirnradlösungen erfordern einen relativ hohen Wartungsaufwand, da u.a. der Schmierfilm im Zahneingriff erhalten werden muss, d.h. dass in regelmäßigen Abständen nachgefettet werden muss.

Diesen Nachteil vermeidet eine Verstelleinrichtung der Rotorblätter über einen als Zahnriementrieb ausgebildeten Zugmittelantrieb. Bei einer solchen Verstelleinrichtung läuft ein Zahnriemen kämmend über eine mit einem Antriebsmotor verbundene Antriebsscheibe und weiter über einen am Fuße des Rotorblattes angebrachten Zahnkranz. Durch die über den Zahnriemen am Zahnkranzumfang angreifende Radialkraft kann dann das Rotorblatt stufenlos in beliebiger Weise verdreht werden.

Die DE 42 21 783 A1 offenbart eine Vorrichtung zur Verstellung von Rotorblättern, bei dem ein zusätzliches zur aerodynamischen Abbremsung des Rotors wirkendes Bremssystem vorgesehen ist, welches bei Ausfall oder Störung des Blattverstellmechanismus eine zusätzliche Bremsvorrichtung bereitstellt. Dies wird erreicht durch ein an der Nabe befestigtes Verteilergetriebe, das eine Zentralrad enthält, das mit einer Bremsscheibe verbunden ist. Das Zentralrad kann mittels einer nicht mit der Rotornabe drehenden Bremszange festgebremst werden, so dass die Rotorblätter im Störfall sicher in die Fahnenstellung geschwenkt werden. Unter anderem ist hierzu auch eine getriebeausgangsseitige Verstellung der Rotorblätter mit einem Zugmitteltrieb/Zahnriementrieb offenbart.

Die DE 10 2008 013 926 A1 offenbart eine Vorrichtung zur Verstellung des Anstellwinkel eines Rotorblattes einer Windenergieanlage mit einem als Zahnriemen oder auch als Kette ausgebildeten so genannten Hülltriebstrang. In der Ausbildung als Zahnriemen umgreift der Hülltriebstrang ein mit einer Außenverzahnung versehenes Antriebsrad und einen mit einer Außenverzahnung versehenen Drehlagerring am nabenseitigen Ende des Rotorblattes.

Da die Leistung von Windkraftanlagen immer höher wird, kommen die an sich sehr gut für diese Aufgaben geeigneten Verstelleinrichtungen mit Zahnriemen langsam an ihre Grenzen. Sowohl die hohe Zahnbelastung/Zahnfußbelastung als auch die Zugbelastung, die durch die erforderliche Vorspannung noch verstärkt wird, sind nur noch mit überdimensionalen Breiten der Zahnriemen zu realisieren. Auch die durch die üblichen rückenseitig anliegenden Spannrollen entstehende Gegenbiegung in den Zahnriemen erhöht deren Belastung.

Auch wenn, wie z.B. in der DE 10 2008 013 926 A1 ebenfalls offenbart, zur Übertragung großer Kräfte der Hülltriebstrang auch aus mehreren zueinander parallelen Riemen bestehen kann oder Verstärkungsmaterialien aus Carbon vorgesehen sind, ist eine allein Materialverstärkung oder Vervielfältigung enthaltende Lösung nicht immer zufriedenstellend.

Die DE 10 2013 206 878 A1 offenbart eine Vorrichtung zur Verstellung eines Rotorblattes einer Windturbine, wobei die Vorrichtung innerhalb der Nabe angeordnet ist. Die Verstellung erfolgt auch dort über einen Riementrieb. Eine der dort offenbarten Ausführungsformen zeigt zwei Riemen, die jeweils mit einem ihrer Enden an einem mit dem Schaft des Rotorblatts verbundenen Antriebsflansch befestigt sind und deren anderes Ende durch einen Antrieb aufgewickelt wird. Bei hohen zu übertragenden Kräfte ist jedoch die Anbindung bzw. die Befestigung am Antriebsflansch bzw. am Schaft des Rotorblattes nicht ganz unproblematisch. Im Übrigen sind bei einer innerhalb der Nabe angeordneten Verstellung eines Rotorblattes die sich ergebenden Hebelverhältnissse ungünstiger, wodurch die aufzuwendenden Kräfte bzw. die Zugkräfte auf Riementriebe sehr hoch werden können.

Für die Erfindung bestand also die Aufgabe, ein System bzw. eine Einrichtung zur Rotorblattverstellung an Windkraftanlagen bereitzustellen, die innerhalb des zur Verfügung stehenden Bauraums große Stellkräfte mit Zugmitteltrieben übertragen bzw. auch bei großen Stellkräfte die Zugkräfte innerhalb der Zugmittelantriebe reduzieren kann, so dass eine hohe Lebensdauer der Riemen erreicht wird.

Gelöst wird diese Aufgabe durch die Merkmale des Hauptanspruchs. Weitere vorteilhafte Ausbildungen sind in den Unteransprüchen offenbart.

Dabei ist der Zugriemen als Flachriemen ausgebildet und an seinen beiden Enden mit je einer mit einem Antriebsmotor versehenen Antriebswelle oder -scheibe verbunden und auf letzteren wechselseitig und abwechselnd aufwickelbar. Der Zugriemen bildet einen zwischen den Antriebswellen oder -scheiben befindlichen, nicht aufgewickelten durchgängigen Trum aus, der den Fuß bzw. Schaft des Rotorblattes über einen Teilumfang umschlingt.

Durch die Ausbildung des Zugriemens als Flachriemen lassen sich sehr hohe Zugkräfte übertragen, so dass steigende Drehmomente bei der Rotorblattverstellung kein Problem mehr darstellen. Die üblicherweise bei den Zahnriemen aus dem Stand der Technik kritischen Zahnfußspannungen/Zahnbelastungen spielen keine Rolle mehr. Auch die für Zahnriemen typische hohe Vorspannung reduziert nicht die Zugkraft, die für die Übertragung des Drehmoments nötig ist.

Durch die Wicklung der Flachriemen auf den Antriebswellen oder-Scheiben ist es möglich, sehr hohe Kräfte zu übertragen und als Zugkräfte in den Riemen einzuleiten. Letztlich ist es bei der Übertragung des Drehmomentes auf den Schaft des Rotorblattes erfindungswesentlich, dass zwischen den Antriebswelle-oder Scheiben ein durchgängiges Trum des Zugmittels gebildet wird, welches durch Reibschluss über den Umschlingungsbogen die nötigen Kräfte übertragen kann. So kann man auf die bei Einzelzugriemen aus dem Stand der Technik üblicherweise nötigen Klemmungen zur mechanischen Verbindung mit dem Schaft grundsätzlich verzichten. Damit besteht auch nicht mehr die Gefahr, dass sich bei übergroßen Zugkräften im Zugmittel vorhandene Verstärkungselemente durch Scherkräften lösen oder von der vom Grundkörper trennen könnten. Durch das erfindungsgemäße Prinzip der endseitigen Wicklung und mittigen Umschlingung zwischen den Antrieben sowie durch die sich ergebenden relativ großen Umschlingungswinkel bei der erfindungsgemäßen Lösung ist es insbesondere auch möglich, auf rückenseitige Spannrollen zu verzichten, wodurch das Zugmittel nicht gegenläufigen Biegungen unterworfen wird, die die Lebensdauer oder die Belastbarkeit verringern könnten. Die Spannung, die durch die Wicklung auf den Antriebswellen erfolgt, ist völlig ausreichend.

Der Fuß bzw. Schaft des Rotorblattes kann hierzu in einem axialen Teilbereich besonders zur Aufnahme des durchgängigen nicht aufgewickelte Trums ausgebildet sein, beispielsweise durch eine entsprechenden Oberflächenausbildung oder -profilierung oder auch durch Führungsscheiben, Flansche oder Wellenabsätze.

Eine vorteilhafte Weiterbildung besteht darin, dass die Antriebe der Antriebswellen oder - scheiben abbremsbar sind. Durch wechselseitige und abwechselnde Wicklung des Zugriemens auf den Antriebswellen oder -scheiben ist damit eine genau definierte Stellung der Rotorblätter leicht anzufahren, da die Antriebe jeweils "gegen Bremse" durch den anderen Antrieb gefahren werden können und damit genau positionierbar sind. Eine solche abgebremste Fahrweise lässt natürlich Spannrollen überflüssig werden. Um das Rotorblatt gänzlich festzusetzen, gehen beide Motoren in Bremsposition.

Bei der erfindungsgemäßen Einrichtung ist vorgesehen, dass der freie, nicht aufgewickelte Trum des Zugriemens den Fuß bzw. Schaft des Rotorblattes im Wesentlichen reibschlüssig umschlingt. Unter einer üblichen Vorspannung und einem Umschlingungswinkel von in der Regel größer als 100° ergibt sich eine ausreichende Normal- und Reibkraft und somit ohne die Notwendigkeit zusätzlicher Spannrollen ein ausreichender Reibschluss, der für den Antrieb der meisten Rotorblattverstellungen völlig ausreicht.

In besonderen Fällen und als zusätzliche Sicherheit besteht eine weitere vorteilhafte Ausbildung darin, dass der nicht aufgewickelte Trum des Zugriemens vorzugsweise in seinem mittleren Bereich der Umschlingung am Fuß bzw. Schaft des Rotorblattes zusätzlich form- und/oder reibschlüssig befestigt ist. Dies kann z. B. durch eine Klemmung geschehen oder auch durch einen Mitnehmer. Mit einer solchen Befestigung lässt sich auch evtl. auftretender Schlupf der Zugriemen sicher vermeiden.

Bei der erfindungsgemäßen Einrichtung kommt es natürlich insbesondere auch auf das Zugmittel an, was in besonderer Weise zur Verwendung in diesem Riementrieb zur Rotorblattverstellung angepasst ist. Insofern ist bei der erfindungsgemäßen Einrichtung vorgesehen, dass der Zugriemen aus im Wesentlichen aus einem elastomeren Material, vorzugsweise aus Polyurethan ausgebildet ist und als Zugträger Corde aufweist, deren Corddurchmesser b im Verhältnis zum Kerndurchmesser D der kleinsten im Zugriementrieb vorhandenen Umlenkrolle, Antriebswelle oder -scheibe der Ungleichung genügt:
D ≥ 40 b.

Als Kerndurchmesser einer Antriebswelle oder -scheibe wird hier der Durchmesser bezeichnet, der die erste Wicklung des Zugmittels/Zugriemens aufnimmt, also der Außendurchmessser des Wellengrundes der Welle bzw. des Scheibengrundes einer Scheibe, ohne Berücksichtigung etwaiger Führungs- oder Bordscheiben. Sinngemäß gilt dasselbe für eine Umlenkrolle, natürlich ohne dass hier eine Wicklung erfolgt. Unter Berücksichtigung der oben genannten Ungleichung ergibt sich für den Zugriemen auch bei hoher Belastung bzw. einem hohen Lastkollektiv eine ausreichend hohe Lebensdauer, so dass diesbezüglich lange Wartungsintervalle möglich sind. Diese Maßgabe gilt für die Antriebsscheibe bzw. -welle natürlich auch dann, wenn deren Mindestdurchmesser / Kerndurchmesser zwar etwas kleiner ausgebildet, aber immer eine oder einige Windungen des Zugmittels permanent auf der Scheibe aufgelegt bleiben und nicht mehr abgewickelt werden. Diese untersten Windungen oder Wicklungen sind sozusagen als Grundwindungen immer vorhanden und vergrößern den im Betrieb wirksamen Kerndurchmesser D.

Diese Vorteile werden verstärkt durch weitere vorteilhafte Ausbildungen, die darin bestehen, dass die Zugträger als Corde aus Stahl bestehen und als Litzenkonstruktion ausgebildet sind, wobei der Litzendurchmesser im Verhältnis zum Kerndurchmesser D der kleinsten im Zugriementrieb vorhandenen Antriebswelle oder -scheibe der Ungleichung genügt: d ≤ 0,006 D, vorzugsweise d ≤ 0,003 D.

Eine weitere vorteilhafte Ausbildung besteht darin, dass die Zwischenräume der Litzenkonstruktion zu mindestens 60%, vorzugsweise zu mindestens 80% mit elastomerem Material ausgefüllt sind. Das vermindert eine Relativbewegung der Litzen untereinander was in bestimmten Fällen zu einer Dauerschädigungen führen könnte Eine weitere vorteilhafte Ausbildung besteht darin, dass die Gesamtdicke des Zugriemens mindestens dem 1,5-fachen des Corddurchmessers b entspricht. Mit einer solchen Auslegung werden vorteilhafterweise Biegespannungen minimiert.

Eine weitere vorteilhafte Ausbildung besteht darin, dass der Flachriemen als mindestens einseitig profilierter Flachriemen ausgebildet ist, z. B. als Rippenriemen/Keilrippenriemen. Durch eine solche durch eine solche Ausbildung besitzt der Zugriemen bzw. Flachriemen eine besonders gute Seitenführung und ist zudem in der Lage, höhere Reibkräfte aufzubringen und trotzdem seine Eignung zur Wicklung zu behalten.

Eine weitere vorteilhafte Ausbildung besteht darin, dass der Zugriemen mindestens einseitig mit eine Gewebelage versehen ist. Insbesondere dann, wenn in einer weiteren vorteilhaften Ausbildung der Zugriemen auf der Außenseite der Gewebelage mit eine Folienbeschichtung versehen ist, vorzugsweise mit einer Polyethylenfolie beschichtet ist, entstehen so innerhalb der aneinander liegenden Wicklungen keine großen Reibkräfte, falls Relativbewegungen auftreten, d. h. falls sich die aufeinander liegenden Wicklungen festziehen.

Eine weitere vorteilhafte Ausbildung besteht darin, dass Rotorachse und die Achsen der Antriebswellen oder -scheiben, auf die der Zugriemen wechselseitig und abwechselnd aufwickelbar ist, im Wesentlichen parallel sind. Dadurch ist im Riementrieb kein Verdrehen, das heißt kein Twist des Zugriemens erforderlich und der Bauraum wird deutlich reduziert.

Anhand eines Ausführungsbeispiels soll die Erfindung näher erläutert werden. Es zeigen
- Fig. 1: prinzipiell eine Windkraftanlage mit verstellbaren Rotoren
- Fig. 2: die erfindungsgemäße Einrichtung zur Rotorblattverstellung einer Windkraftanlage als Prinzipskizze
- Fig. 3: eine Einrichtung zur Rotorblattverstellung aus dem Stand der Technik als Prinzipskizze
- Fig. 4: einen als unprofilierten Flachriemen ausgebildeten Zugriemen der erfindungsgemäße Einrichtung in Form einer Prinzipskizze
- Fig. 5: eine Litzenkonstruktion

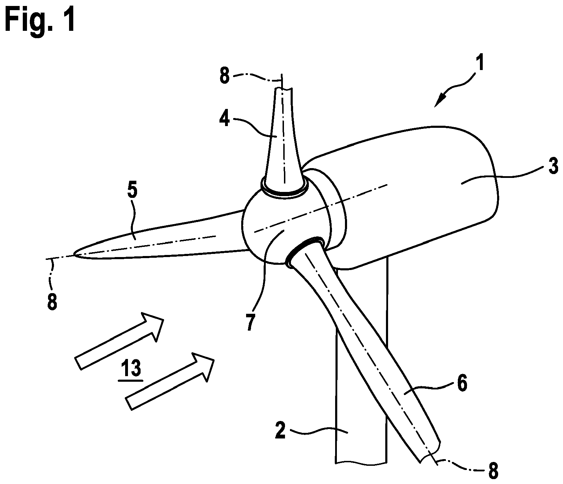

Fig. 1 zeigt prinzipiell eine Windkraftanlage 1 mit einem auf einem Turm 2 befestigten Generatorgehäuse 3. Die Windkraftanlage weist einen dreiblättrigen Rotor auf mit den Blättern 4, 5 und 6, die in der Nabe 7 gelagert und alle in ihrer Anstellung zum anströmenden Wind 13 verstellbar sind, d.h. um ihre Längsachsen 8 drehbar ausgebildet und dadurch mit einer Rotorblattverstellung ausgerüstet sind.

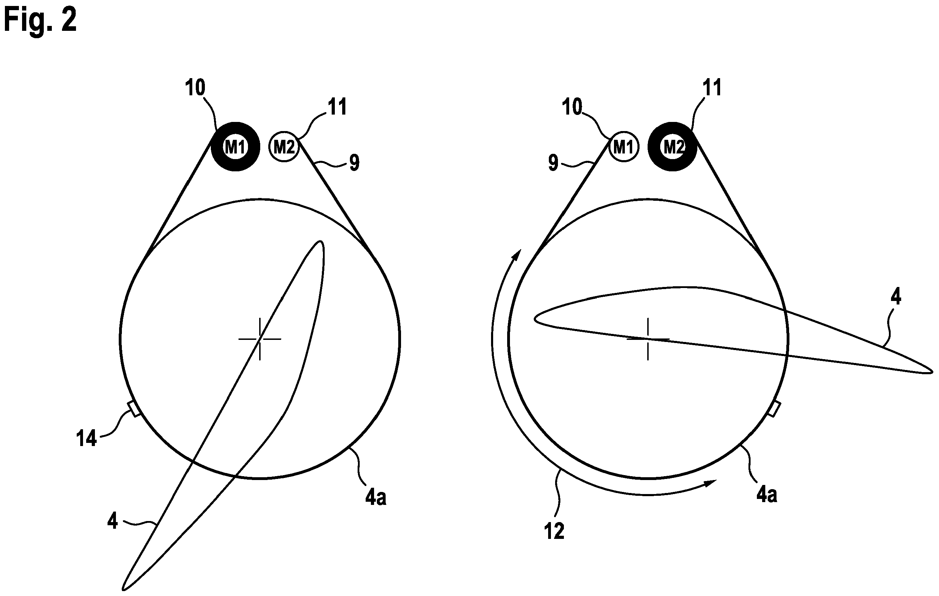

Fig, 2 zeigt als Prinzipskizze die erfindungsgemäße Einrichtung zur Rotorblattverstellung beispielsweise am Rotorblatt 4 dieser Windkraftanlage in Richtung der Blattlängsachse 8 gesehen, wobei das Rotorblatt 4 im linken und rechten Teil der Fig. 2 in zwei verschiedenen Stellungen dargestellt ist. Die Verstellung des drehbar gelagerten Rotorblattes 4 erfolgt über einen Zugriementrieb, bei dem ein Zugriemen 9 den Fuß bzw.

Schaft des Rotorblattes 4a auf einem Teilumfang so umschlingt, dass ein zur Verstellung des Rotorblattes erforderliches Drehmoment auf den Schaft übertragbar ist.

Der Zugriemen ist hier als Flachriemen ausgebildet und an seinen beiden Enden mit an je einer mit einem Antriebsmotor M1 bzw. M2 versehenen Antriebswelle 10 bzw. 11 befestigt und auf letzteren wechselseitig und abwechselnd aufwickelbar.

In der Figur 2 erkennt man, dass auf der linken Seite bei der dort gezeigten Stellung des Rotorblattes 4 der Flachriemen 9 mithilfe des Antriebsmotors M1 auf der Antriebswelle 10 aufgewickelt ist und von der Antriebswelle 11, die mit dem Motor M2 verbunden ist, abgewickelt ist. Im Gegensatz dazu ist auf der rechten Seite der Figur 2 gezeigt, dass bei der dort veränderten Stellung des Rotorblattes 4 der Flachriemen 9 mithilfe des Antriebsmotors 2 auf der Antriebswelle 11 aufgewickelt ist und von der Antriebswelle 10 abgewickelt ist.

Der Zugriemen/Flachriemen 9 bildet einen zwischen den Antriebswellen oder -scheiben befindlichen durchgängigen Trum aus, der nicht aufgewickelt ist, sondern zur Umschlingung des und zur Kraftübertragung bzw. Momentenübertragung auf den Schaft des Rotorblattes vorgesehen ist. Dieser zwischen den Befestigungen auf den Antriebsscheiben bzw. Wellen durchgängige Trum umschlingt den Fuß bzw. Schaft des Rotorblattes 4a reibschlüssig über den Teilumfang 12. Es handelt sich hier also nur um einen einzigen längeren ununterbrochenen Zugriemen, der zum Antrieb des Schaftes / des Rotorblatts genutzt wird.

Zur Absicherung eines Durchrutschens bei einer extremen plötzlichen stoßartigen Drehbelastung des Rotors ist der nicht aufgewickelte Trum des Zugriemens 9 vorzugsweise in seinem mittleren Bereich der Umschlingung am Fuß bzw. Schaft des Rotorblattes formschlüssig mit einer hier nicht im Detail dargestellten Klemmung 14 befestigt.

Hier bilden also der Flachriemen 9, die Antriebsscheiben bzw. -wellen 10 und 11, und der Umschlingungsbereich am Schaft des Rotorblattes den Riementrieb, mit dem das Rotorblatt um seine Längsachse gedreht/verstellt wird. Dadurch entsteht eine sehr einfache, effektive und bezüglich des erforderlichen Bauraums minimierte Einrichtung zur Rotorblattverstellung.

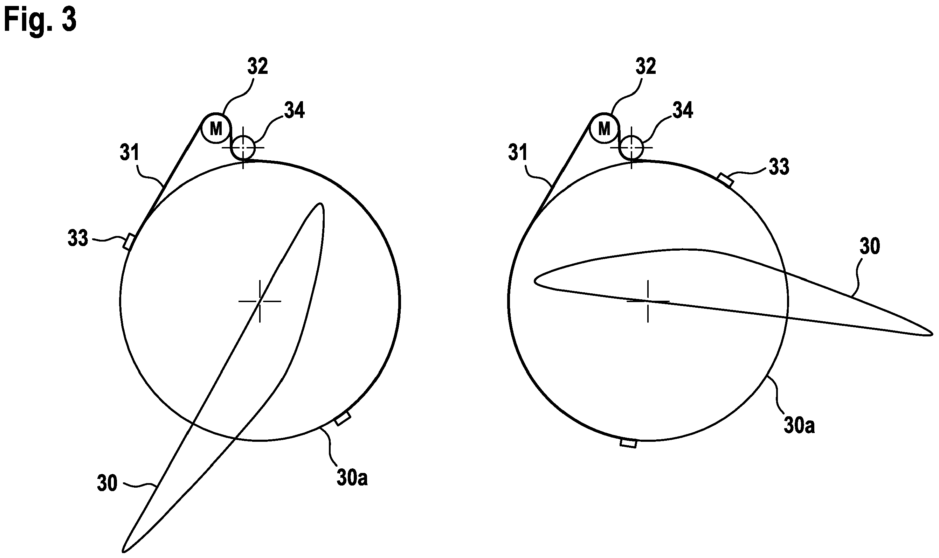

Zum Vergleich zeigt Fig. 3 prinzipiell eine herkömmliche Rotorblattverstellung aus dem Stand der Technik. Die Verstellung des drehbar gelagerten Rotorblattes 30 erfolgt dort durch einen Zahnriementrieb, bei dem ein Zahnriemen 31 einerseits in eine mit einem Motor M verbundene Antriebsscheibe 32 kämmend eingreift und andererseits am Schaft 30a des Rotorblattes 30 angreift, üblicherweise an einer hier nicht im Detail dargestellten verzahnten Spannplatte. Die Antriebsscheibe ist mit einer zum Zahnriemen komplementären Verzahnung versehen. Der Zahnriemen umschlingt die Antriebsscheibe um einen Teil des jeweiligen Außenumfangs und ist an seinen Enden mit jeweils einer Klemmung 33 auf dem Rotorschaft befestigt. Die Zugkräfte und das übertragbare Drehmoment einer solchen Verstelleinrichtung mit Zahnriemen sind begrenzt und wesentlich niedriger als die bei der erfindungsgemäßen Ausbildung übertragbaren Kräfte. Der Zahnriemen 31 umläuft mit seinem Rücken auch eine als Rückenrolle ausgebildete Umlenkrolle 34, die gleichzeitig als Spannrolle dient. Somit bilden hier Zahnriemen 31, Antriebsscheibe 32, Umlenkrolle 34 und der Schaft mit Spannplatte diesen Zahnriementrieb aus dem Stand der Technik, mit dem das Rotorblatt um seine Längsachse gedreht/verstellt wird.

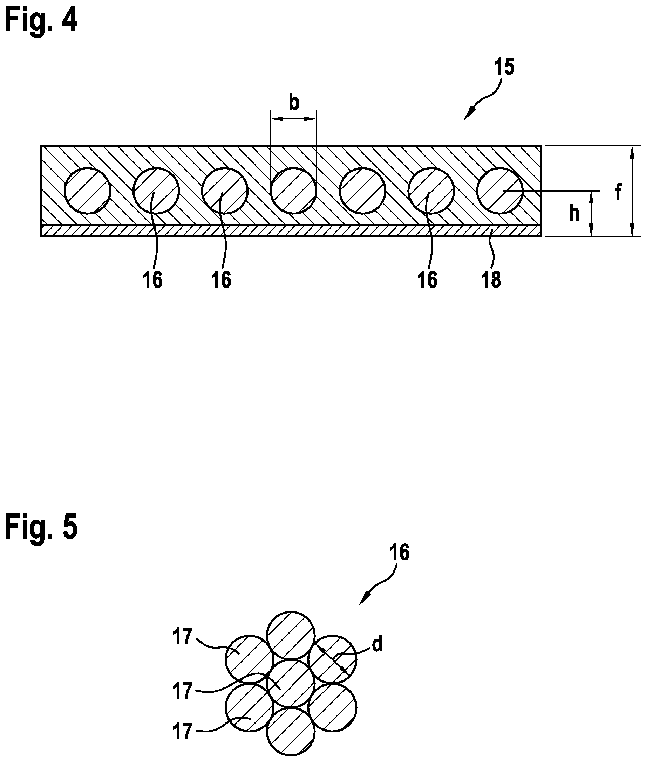

Bei der erfindungsgemäßen Einrichtung zur Verstellung eines Rotorblattes spielt natürlich der dazu benutzte Riemen zur Kraftübertragung eine wesentliche Rolle. Fig. 4 zeigt hierzu einen als unprofilierten Flachriemen 15 ausgebildeten Zugriemen, der in einheitlicher und die zugrundeliegende Erfindungsidee unterstützende Art und Weise zur erfindungsgemäßen Einrichtung gehört. Der Zugriemen besteht hier aus Polyurethan und weist Stahlcorde 16 als Längs-Zugträger auf, für deren Corddurchmesser b im Verhältnis zum Kerndurchmesser D der im Zugriementrieb vorhandenen gleichgroßen

Antriebswellen bzw. -scheiben gilt: D = 48 b.

Die Stahlcorde sind aus Litzen 17 gedreht bzw. geschlagen, wie Fig. 5 zeigt. Für den hier gewählten Litzendurchmesser d gilt: d = 0,004 D. Die Zwischenräume der Litzenkonstruktion sind zu etwa 70%, mit elastomerem Material ausgefüllt sind. Die Gesamtdicke f des Zugriemens entspricht hier dem 1,9-fachen des Corddurchmessers b.

Der Zugriemen 15 ist auf seiner Außenseite der Gewebelage 18 versehen, die wiederum mit einer hier nicht näher dargestellten Polyethylenfolie beschichtet ist.

### Bezugszeichenliste

### (Teil der Beschreibung)

- 1: Windkraftanlage
- 2: Turm der Windkraftanlage
- 3: Generatorgehäuse
- 4: Verstellbares Rotorblatt
- 4a: Schaft des Rotorblattes
- 5: Verstellbares Rotorblatt
- 6: Verstellbares Rotorblatt
- 7: Nabe
- 8: Rotorblattlängsachse
- 9: Zugriemen
- 10: Antriebswelle / Antriebsscheibe
- 11: Antriebswelle / Antriebsscheibe
- 12: Teilumfang
- 13: Wind, Windrichtung
- 14: Klemmung
- 15: Flachriemen
- 16: Stahlcord
- 17: Litze
- 18: Gewebelage

- 30: Rotorblatt
- 30a: Schaft des Rotorblattes
- 31: Zahnriemen
- 32: Antriebsscheibe
- 33: Klemmung
- 34: Rückenrolle / Umlenkrolle

## Patentansprüche

1. Einrichtung zur Rotorblattverstellung an einer Windkraftanlage (1), bei der die Verstellung eines drehbar gelagerten Rotorblattes (4, 5, 6) über einen Zugriementrieb erfolgt, bei dem ein Zugriemen (9, 15) den Fuß bzw. Schaft des Rotorblattes (4a) mindestens teilweise so umschlingt, dass ein zur Verstellung des Rotorblattes erforderliches Drehmoment auf den Schaft übertragbar ist, wobei der Zugriemen (9) als Flachriemen (15) ausgebildet ist, **dadurch gekennzeichnet, dass** der Zugriemen (9) an seinen beiden Enden mit je einer mit einem Antriebsmotor versehenen Antriebswelle oder -scheibe (10, 11) verbunden und auf letzteren wechselseitig und abwechselnd aufwickelbar ist, wobei der Zugriemen (9) einen zwischen den Antriebswellen oder -scheiben befindlichen, nicht aufgewickelten durchgängigen Trum ausbildet, der den Fuß bzw. Schaft des Rotorblattes über einen Teilumfang (12) umschlingt, wobei der freie, nicht aufgewickelte Trum des Zugriemens (9) den Fuß bzw. Schaft (4a) des Rotorblattes reibschlüssig umschlingt, wobei der Zugriemen (9, 15) aus im Wesentlichen einem elastomeren Material, vorzugsweise aus Polyurethan ausgebildet ist und als Zugträger in Riemenlängsrichtung Corde (16) aufweist, deren Corddurchmesser b im Verhältnis zum Kerndurchmesser D der kleinsten im Zugriementrieb vorhandenen Umlenkrolle, Antriebswelle oder -scheibe der folgenden Ungleichung genügt: D ≥ 40 b.

2. Einrichtung nach Anspruch 1, bei der der nicht aufgewickelte Trum des Zugriemens (9) vorzugsweise in seinem mittleren Bereich der Umschlingung am Fuß bzw. Schaft des Rotorblattes form- und/oder reibschlüssig befestigt ist.

3. Einrichtung nach Anspruch 1 oder 2, bei der Zugträger als Corde (16) aus Stahl ausgebildet sind.

4. Einrichtung nach Anspruch 1, 2, oder 3, bei der die Corde als Litzenkonstruktion ausgebildet sind und der Durchmesser d der Litzen (17) im Verhältnis zum Kerndurchmesser D der kleinsten im Zugriementrieb vorhandenen Antriebswelle oder -scheibe der Ungleichung genügt: d ≤ 0,006 D , vorzugsweise d ≤ 0,003 D.

5. Einrichtung nach Anspruch 4, bei der die Zwischenräume der Litzenkonstruktion zu mindestens 60%, vorzugsweise zu mindestens 80% mit elastomerem Material ausgefüllt sind.

6. Einrichtung nach einem der Ansprüche 1 bis 5, bei der die Gesamtdicke des Zugriemens (9, 15) mindestens dem 1,5-fachen des Corddurchmessers b entspricht.

7. Einrichtung nach einem der Ansprüche 1 bis 6, bei der der Flachriemen als mindestens einseitig profilierter Flachriemen ausgebildet ist, vorzugsweise als Rippenriemen.

8. Einrichtung nach einem der Ansprüche 1 bis 7, bei der der Zugriemen mindestens einseitig mit einer Gewebelage (18) versehen ist.

9. Einrichtung nach Anspruch 8, bei der der Zugriemen auf der Außenseite der Gewebelage mit einer Beschichtung versehen ist, vorzugsweise mit einer Polyethylenfolie beschichtet ist.

10. Einrichtung nach einem der Ansprüche 1 bis 9, bei der Rotorachse und die Achsen der Antriebswellen oder -scheiben, auf die der Zugriemen wechselseitig und abwechselnd aufwickelbar ist, im Wesentlichen parallel sind.

11. Einrichtung nach einem der Ansprüche 1 bis 10, bei der die Antriebe der Antriebswellen oder -scheiben abbremsbar sind.

## Claims

1. Device for adjusting the rotor blades on a wind turbine (1), in which the adjustment of a rotatably mounted rotor blade (4, 5, 6) is effected by means of a tension belt drive in which a tension belt (9, 15) wraps around at least part of the root or shaft of the rotor blade (4a) so that it is possible to transmit, to the shaft, a torque that is required for adjusting the rotor blade, wherein the tension belt (9) is designed as a flat belt (15), **characterized in that** the tension belt (9) is connected, at both ends, to in each case a drive shaft or drive plate (10, 11) provided with a drive motor, and can be wound onto the latter reciprocally and alternately, wherein between the drive shafts or drive plates the tension belt (9) forms a non-wound, continuous strand that wraps around the root or shaft of the rotor blade over a partial periphery (12),
wherein
the free, non-wound strand of the tension belt (9) wraps around the root or shaft (4a) of the rotor blade with a friction fit, wherein the tension belt (9, 15) is made essentially from an elastomeric material, preferably polyurethane, and has, as tension members in the longitudinal direction of the belt, cords (16) whose cord diameter b compared to the core diameter D of the smallest redirection roller, drive shaft or drive plate present in the tension belt drive satisfies the following inequality: D ≥ 40 b.

2. Device according to Claim 1, in which the non-wound strand of the tension belt (9) is preferably secured, in its middle region of the wrapping, to the root or shaft of the rotor blade with a form fit and/or friction fit.

3. Device according to Claim 1 or 2, in which the tension members are in the form of steel cords (16).

4. Device according to Claim 1, 2 or 3, in which the cords are designed as a braided construction and the diameter d of the braids (17), compared to the core diameter D of the smallest drive shaft or drive plate present in the tension belt drive satisfies the following inequality: d ≤ 0.006 D, preferably d ≤ 0.003 D.

5. Device according to Claim 4, in which the voids in the braided construction are at least 60% and preferably at least 80% filled with elastomeric material.

6. Device according to one of Claims 1 to 5, in which the overall thickness of the tension belt (9, 15) corresponds to at least 1.5 times the cord diameter b.

7. Device according to one of Claims 1 to 6, in which the flat belt is designed as a flat belt with a profile on at least one side, preferably as a ribbed belt.

8. Device according to one of Claims 1 to 7, in which the tension belt is provided on at least one side with a woven layer (18).

9. Device according to Claim 8, in which the tension belt is provided with a coating on the outer side of the woven layer, and is preferably coated with a polyethylene film.

10. Device according to one of Claims 1 to 9, in which the rotor axis and the axes of the drive shafts or drive plates, onto which the tension belt can be wound reciprocally and alternately, are essentially parallel.

11. Device according to one of Claims 1 to 10, in which the drives of the drive shafts or drive plates can be braked.

## Revendications

1. Dispositif de réglage de pale de rotor sur une éolienne (1), le réglage d'une pale de rotor (4, 5, 6) montée à rotation se faisant par le biais d'un entraînement à courroie de traction dans lequel une courroie de traction (9, 15) s'enroule au moins partiellement autour du pied ou de la tige de la pale de rotor (4a) de manière à transmettre à l'arbre un couple, nécessaire au réglage de la pale de rotor, la courroie de traction (9) étant conçue comme une courroie plate (15), **caractérisé en ce que** la courroie de traction (9) est reliée, à chacune de ses deux extrémités, à un arbre ou disque d'entraînement (10, 11) muni d'un moteur d'entraînement et peut s'enrouler sur ledit arbre ou disque d'entraînement alternativement et de manière alternée, la courroie de traction (9) formant un brin continu non enroulé qui est situé entre les arbres ou disques d'entraînement et qui s'enroule autour du pied ou de la tige de la pale de rotor sur une partie (12) de la circonférence, le brin libre, non enroulé, de la courroie de traction (9) s'enroulant par friction autour du pied ou de la tige (4a) de la pale de rotor, la courroie de traction (9, 15) étant formée sensiblement d'une matière élastomère, de préférence de polyuréthane et comportant des cordons (16) comme support de traction dans la direction longitudinale de la courroie, le diamètre b des cordons par rapport au diamètre de l'âme D de la plus petite poulie de renvoi, du plus petit arbre ou disque d'entraînement présent dans l'entraînement à courroie de traction satisfaisant à l'inégalité suivante : D ≥ 40 b.

2. Dispositif selon la revendication 1,
le brin non enroulé de la courroie de traction (9) étant fixé par complémentarité de formes et/ou par frottement, de préférence dans sa région médiane de l'enroulement, au pied ou à la tige de la pale du rotor.

3. Dispositif selon la revendication 1 ou 2, des supports de traction étant conçus sous la forme de cordons (16) en acier.

4. Dispositif selon la revendication 1, 2 ou 3, les cordons étant conçus comme une structure en torons et le diamètre d des torons (17) par rapport au diamètre d'âme D du plus petit arbre ou disque d'entraînement présent dans l'entraînement par courroie de traction satisfaisant à l'inégalité : d ≤ 0,006 D, de préférence d ≤ 0,003 D.

5. Dispositif selon la revendication 4, les interstices de la structure en torons étant remplies au moins à 60 %, de préférence au moins à 80 %, avec une matière élastomère.

6. Dispositif selon l'une des revendications 1 à 5, l'épaisseur totale de la courroie de traction (9, 15) correspondant à au moins 1,5 fois le diamètre b des cordons.

7. Dispositif selon l'une des revendications 1 à 6, la courroie plate étant conçue sous la forme d'une courroie plate profilée sur au moins un côté, de préférence sous la forme d'une courroie striée.

8. Dispositif selon l'une des revendications 1 à 7, la courroie de traction étant munie, au moins sur un côté, d'une couche de tissu (18).

9. Dispositif selon la revendication 8, la courroie de traction étant munie, du côté extérieur de la couche de tissu, d'un revêtement, de préférence d'un film de polyéthylène.

10. Dispositif selon l'une des revendications 1 à 9, l'axe du rotor et les axes des arbres ou disques d'entraînement sur lesquels la courroie de traction est enroulée alternativement et de manière alternée, sont sensiblement parallèles.

11. Dispositif selon l'une des revendications 1 à 10, les entraînements des arbres ou disques d'entraînement peuvent être freinés.
